# EUROPEAN PATENT APPLICATION

(11) **EP 2 116 654 A2**
(43) Date of publication of application: **11.11.2009**
(21) Application number: 09075164.5
(22) Date of filing: 03.04.2009
(51) Int. Cl.: E03B 7/07

(54) **Water device**

(30) Priority: 04.04.2008 IT CA20080011
(71) Applicant: Cagnacci, Andrea, 09010 Vallermosa (CA) (IT)
(72) Inventor: Cagnacci, Andrea, 09010 Vallermosa (CA) (IT)

(57) **Abstract**

Water device that allows the precision inspection of a comparing meter without the disassembly of any of the water supply equipment set thanks to the manipulation of the 3 path above valve integrated in it that allows the flow deflection in order that it streams to another comparing meter.

## Description

### Invention field

This invention refers to a water device which allows the precision control of a water metre set up through the adding of a in series comparing counter without dismantling any kind of equipment of the water delivering set.

### Actual technical state

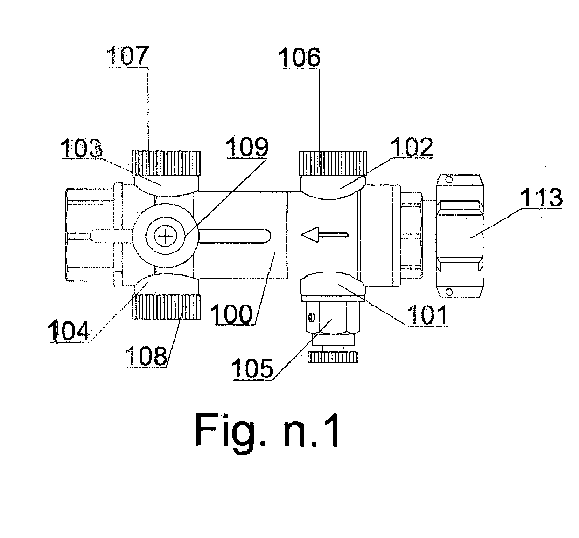

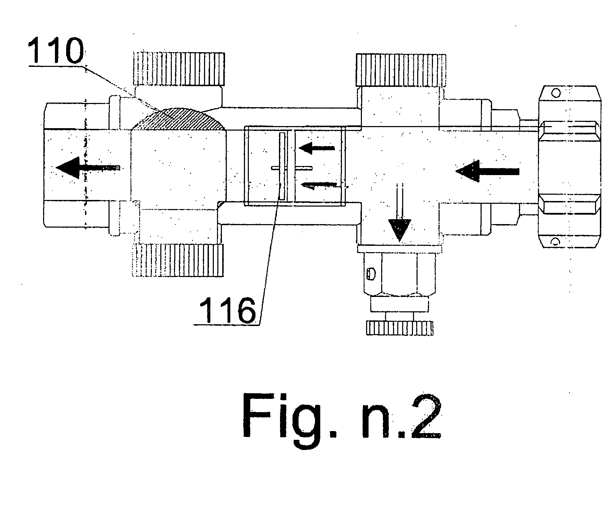

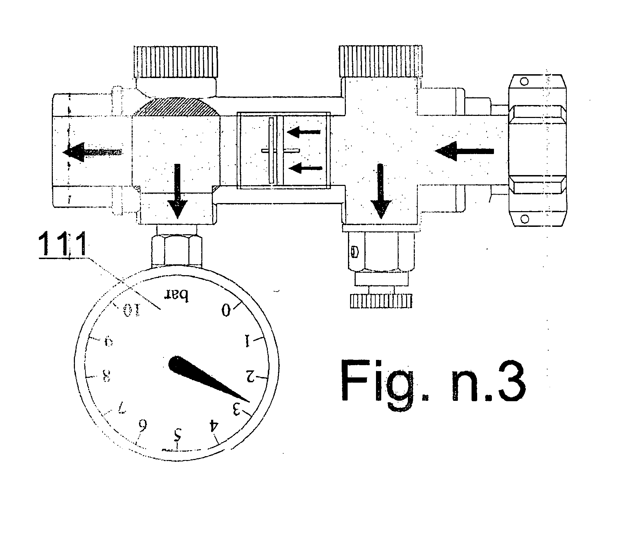

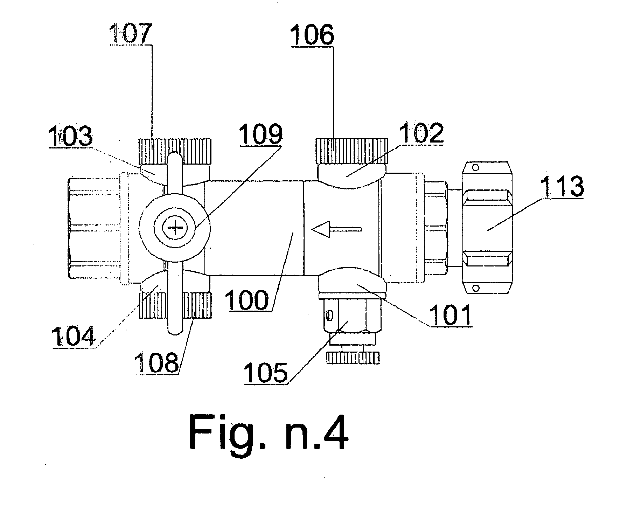

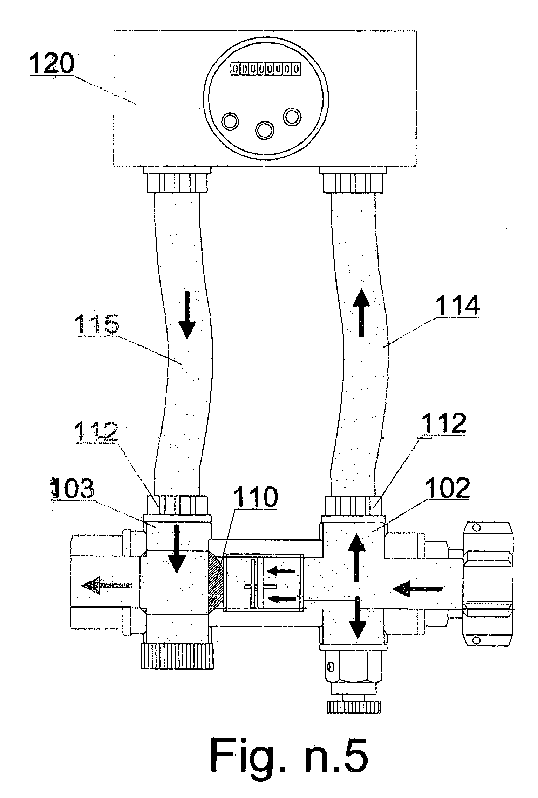

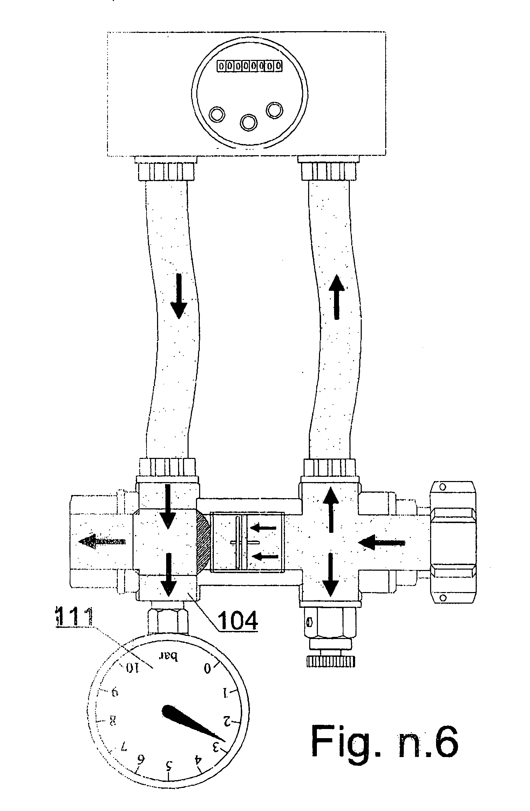

The usual procedure followed by state holding companies is to install downhill a fiscal counter a series of equipment fit to obtain some essential functions such as: the non reflux of domestic system into the state system, the drawing of water samples to analyse and an interception device handled by customers.

Solutions usually adopted are:
assembling different equipment monofunction such a ball valve with drawing and an anti-reflux valve in order to obtain a multifunction set but with the disadvantage of executing lots of equipped connections and get a bulky final product; use monobloc devices which contain and allow more facility.

### Invention summary

The purpose of this invention is to enable the control of the installed meter without the disassembly of any piece of the customers'set; this result is obtained diverting the flow, by moving the 3 path ball valve Illustration 2 (110) which through the threaded side derivation Illustration 5 (102), will stream in a rigid or flexible pipe Illustration 5 (114) connected to the comparing meter Illustration 5 (120) to get back, always through a rigid or flexible pipe Illustration 5 (115), to the customers' water system, throughout the threaded side derivation Illustration 5 (103), set downhill the anti-reflux valve Illustration 2 (116). Pipes Illustration 5 (114 and 115), for the connection to the comparing meter, are fixed to the respective threaded derivation Illustration 5 (102 and 103) with different materials fittings Illustration 5 (112), usually available on the market. The control operation can be done in presence of the customer solving objections immediately; costs and inspection time will certainly result lower. This invention aims to achieve the purposes discussed above by the realisation of a water device conformed to claim 1.

### Short descrition of illustrations

Further invention features and advantages will be clearer according to the more detailed description in a favourite form of realisation, but not exclusive, of a water device, illustrated as example and not exclusively, with the aid of illustration tables where:
- Illustration 1 represents a monobloc valve made up by a body valve Illustration 1 (100) defining the whole external wrapping of the same ball valve; a ball equipped with holes, moved by the handle Illustration 1 (109) which transfers the spinning movement through a small shaft; an anti-reflux valve Illustration 2 (116) set inside the same body valve; n° 4 side derivations Illustration 1 (101, 102, 103, 104) above one of which Illustration 1 (101) is assembled a drawing valve for the local health centre Illustration 1 (105). Unemployed derivations are closed by plugs Illustration 1 (106, 107, 108) of different materials usually available on the market. The valve is also equipped with an outlet tang Illustration 1 (113), equipped with a washer for a quick connection to the meter.
- Illustration 2 represents the valve of illustration 1, in which the presence of the anti-reflux valve is in evidence Illustration 2 (116) and the position of the ball or sphere Illustration 2 (110) in normal position of use of the monobloc valve, with the direction of the fluid's way inside it.
- Illustration 3 shows the valve of illustrations 1 and 2 equipped with a manometer Illustration 3 (111) on its derivation Illustration 4 (104), for the pressure control.
- Illustration 4 represents the valve of illustration 1 but with the handle Illustration 4 (109) in closing position.
- Illustration 5 represents the valve of Illustration 4 where the ball or sphere in closing position or flux deflection Illustration 5 (110) and the arrows indicating the way of fluid flowing when the valve is connected to a comparing meter Illustration 5 (120) are shown. In this case, when the plugs are removed Illustration 4 (106) and Illustration 4 (107) and when the pipes are connected Illustration 5 (114) and Illustration 5 (115), considering derivation Illustration 5 (102) and Illustration 5 (103), with the fittings Illustration 5 (112), the fluid streams in the comparing meter Illustration 5 (120) to get back to the monobloc valve.
- Illustration 6 shows the valve of Illustration 4 and Illustration 5 equipped with a manometer Illustration 6 (111) on its derivation Illustration 6 (104), for the pressure control.

### Detailed description of a favourite realisation form of the invention

According to this invention, in illustrations 1 and 2 the multifunction monobloc valve has all the features analyzed afterwards:
- the fluid can be seized by the working of a 3 path ball valve Illustration 5 (110) integrated in the monobloc, that can be operated by a butterfly handle Illustration 1 (109).
- Completeness and facility of the integrated anti-reflux valve Illustration 2 (116) is verifiable by closing the water flow before the meter and by opening the drawing tap Illustration 1 (105); in case the anti-reflux valve is damaged there is a leak of water from the domestic system to the drawing tap.
- The emptying of domestic system, caution taken by seasonal accommodation customers in case of cold climate (chalet), can be done by opening two threaded nibs Illustration 1 (103, 104) present downhill the anti-reflux valve.
- The precision meter control is a customer's right sanctioned by the Holding Companies Service Bill; this operation is done by the holding company in two ways:
   1) disassembling the old meter in order to put it through inspection on a homologated testing bench at the site of the holding company or at the metric officer with the installation of a temporary meter to the customer's.
   2) adding a meter, usually with a superior precision class, in series to the first; this is often an impossible operation because of the lack of space in the niche or winze slot and for the necessity to dismantle a piece of the consumption set.
The object of this relation allows the inspection of the meter installed without the dismantling of any consumption set piece; the result is obtained by the flow deflection through the provided 3 path valve Illustration 5 (110); in fact, setting it to action, water will follow the illustrated course in Illustration 5 and Illustration 6 and will stream through the comparing meter.

## Claims

1. Water device **characterized by** the fact to enable the precision control of installed meter by means of the adding of a comparing meter without the disassembly of none of the water supply equipment set. This operation is possible thanks to an integrated ball valve that can be operated through an operating lever Illustration 1 (109) and 2 lateral threaded derivations Illustration 1 (102, 103), usually closed by plugs Illustration 1 (106, 107), which, after the manipulation of the 3 path above valve, allows the flow deflection in order that it streams in the comparing meter Illustration 5 (120) and returns in proximity of the valve outlet.

2. Water device as in claim 1 **characterized by** the fact that there is an anti-reflux valve Illustration 2 (116) to avoid the fluid in the domestic system returns to the state system.

3. Water device as in claims 1 and 2 **characterized by** the fact that there is another threaded side derivation Illustration 1 usually closed by a plug Illustration 1 (108) made of plastic or metallic material which can be used for the equipped of a manometer Illustration 3 (111) for the pressure control.

4. Water device as in claim 1 or any kind of the previous vindications **characterized by** the fact that there is another threaded side derivation Illustration 1 (101), on which there is a drawing valve Illustration 1 (105).

5. Water device as in claim 1 or any kind of the previous vindications **characterized by** the fact that there is also an outlet tang Illustration 1 (113), equipped with a washer for a quick connection to the meter.

6. Water device as in claim 1 or any kind of the previous vindications **characterized by** the fact that a ball valve can be manipulated to deflect the water flow to derivations which allows the comparing meter water supply without the necessity to dismantle any piece of the consumption set.
